# EUROPEAN PATENT SPECIFICATION

(11) **EP 0 836 527 B1**
(45) Date of publication and mention of the grant of the patent: **13.08.2003**
(21) Application number: 96912729.9
(22) Date of filing: 12.04.1996
(51) Int. Cl.: B01D 53/86

(54) **ORGANIC POLLUTANT REMOVAL SYSTEM AND METHOD**
VERFAHREN UND VORRICHTUNG ZUR ENTFERNUNG VON ORGANISCHEN VERUNREINIGUNGEN
SYSTEME ET PROCEDE D'ELIMINATION DE POLLUANTS ORGANIQUES

(30) Priority: 23.05.1995 US 448010
(43) Date of publication of application: 22.04.1998
(73) Proprietor: UNITED TECHNOLOGIES CORPORATION, Hartford, CT 06101 (US)
(72) Inventor: FREIHAUT, James, D., South Windsor, CT 06074 (US); BONCZYK, Paul, A., Bolton, CT 06043 (US); SANGIOVANNI, Joseph, J., West Suffield, CT 06093 (US); WOODY, Bernard, A., Tolland, CT 06084 (US)
(74) Representative: Klunker . Schmitt-Nilson . Hirsch
(86) International application number: US9605103
(87) International publication number: WO96037280

(56) References cited:
- EP-A- 0 515 847
- EP-A- 0 630 679
- DE-A- 4 023 995
- DE-A- 4 217 432
- DE-A- 4 237 390
- DE-A- 4 410 476

## Description

### Technical Field

The present invention relates to the removal of organic pollutants from an enclosed environment and particularly from air within an enclosed environment such as a room, vehicle, aircraft, spacecraft, submarine, etc.

### Background of the Invention

Volatile organic compounds including low molecular weight gases, condensable vapors, environmental tobacco smoke, bio-aerosols, among others, including, but not limited to, 1,3-butadiene, formaldehyde, acetaldehyde, benzene, toluene, acetone, methyl-ethyl ketone, hydrogen sulfide, triethylamine, phthalates, mineral oils, volatile fire retardants, etc. and irritants such as pollens or fungus spores, which are commonly referred to as organic pollutants, often constitute both a comfort concern and health hazard in an enclosed environment. Conventionally active deaning systems such as filters, thermal catalytic beds and others, remove these organic pollutants from the environment. These systems, however, are neither energy nor cost efficient due to the pressure drop across the system or the energy required for thermal oxidation, the post conditioning of the air to acceptable temperatures, and the limited life of the system.

Treatment of organic pollutants is particularly problematic in relatively small or confined spaces. For example, within an automobile, organic pollutants contribute to passenger discomfort, windshield fogging, and the "blue haze" film which builds on the interior windows and windshield. However, due to the automobile's size and geometry, the use of an active cleaning system is neither practical nor cost effective for the majority of automobiles in the. "normal" price range; i.e. below about $15,000.

DE 402 399 5A1 discloses a method for cleaning air in vehicles by way of a photcatalytic semiconductor material, which is located in a fixed bed and which is in use illuminated by an UV lamp. This document further emphasizes the advantage of a relative movement of the photocatalyst and UV lamp with respect to each other and further teaches to position the fixed bed elastically within the vehicle. DE 441 047 6A1 teaches a lamp, e. g. a UV lamp having a glass body coated at its outer surface with a photocatalytic semiconductor coating for decomposing organic pollutants within an enclosed environment, e. g. tobacco smoke particles within rooms.

What is needed in the art is a system for efficiently and effectively removing organic pollutants from a closed environment.

### Disclosure of the Invention

The present invention discloses a ventilation system in according with claim 1. The following description also relates to removing organic pollutants from an enclosed environment, a system therefore, and a method for applying a photocatalytic semiconductor coating to a substrate. The coating method comprises: forming an admixture of a photocatalytic semiconductor, water, an anti-agglomerating agent, and a homogenizing agent; removing sufficient water from said admixture to form a gel; coating said cleaned substrate with the gel, cleaning the substrate to remove contaminants; and heating the coated substrate to a temperature sufficient to convert said photocatalytic semiconductor to its active form.

A system for removing organic pollutants from an enclosed environment which does not fall under the scope of claim 1 comprises: a window or windshield having a TiO₂ coating; a UV source oriented such that during operation said UV source illuminates said TiO₂ coating; and a means for supplying water to said TiO₂ coating. Essentially, UV source illuminates the TiO₂ coating, activating the coating and causing the TiO₂ to dissociate water on its surface to form hydroxyl radicals. The hydroxyl radicals then oxidize organic pollutants adsorbed on the TiO₂ coating.

The foregoing and other features and advantages of the present invention will become clear from the following description and drawings.

### Brief Description of the Drawings

Figure 1 is a cut-away, side view of one embodiment which forms not part of the present invention where a TiO₂ coating and a UV lamp are used in the removal of organic pollutants from the interior of an automobile.
Figure 2 is another embodiment which does not form part of the present invention where organic pollutants in a room are oxidized by a UV illuminated TiO₂ coating on a window in the room.

### Best Mode for Carrying Out the Invention

The present invention comprises a method and system for removing organic pollutants from an enclosed environment such as a room or the interior of a vehicle, including an automobile, airplane, spacecraft, train, bus, food transportation system, etc. Essentially, the organic pollutants contact an illuminated photocatalytic semiconductor. Water molecules on the photocatalytic semiconductor surface dissociate to form hydroxyl radicals which oxidize the organic pollutants.

The photocatalytic semiconductor is a compound activated by light within its band width and capable of dissociating water molecules to form hydroxyl radicals which oxidize the organic pollutants. Some such photocatalytic semiconductors include metal oxides such as: tin dioxide. (SnO₂), titanium dioxide (TiO₂), zinc oxide (ZnO), tungsten trioxide (WO₃), lead oxide (PbO), iron titanium trioxide (FeTiO₃), vanadium pentoxide (V₂O₅), iron oxide (Fe₂O₃), and others such as cadmium sulfide (CdS). Preferably the photocatalytic semiconductor has an optical absorption band close to visible light, is not readily poisoned by compounds in air such as organic pollutants, and does not itself readily oxidize or evaporate. One such photocatalytic semiconductor is TiO₂ which is inexpensive, stable, environmentally sound, resistant to poisoning, and readily activated and regenerated by ultraviolet (UV) with wavelengths less than about 400 nanometers (nm).

Production of the organic pollutant removal system comprises forming a photocatalytic semiconductor suspension and coating a cleaned substrate therewith. The suspension can be the type utilized in a sol-gel process or any other suspension capable of coating the substrate to attain a photocatalytic semiconductor coating having sufficient thickness to oxidize the organic pollutants, and a resistance to abrasion.

The sol-gel process comprises applying a colloidal sol to the substrate such as fused silica, the coating is then partially dewatered to form a gel which is sintered in a controlled heating process to convert the coating to a durable ceramic material.

For example, preparation of a colloidal sol can comprise forming an admixture of titanium tetra isopropoxide (TTIP), nitric acid, or other anti-agglomerating agent, isopropyl alcohol, or another homogenizing and reaction rate reducing agent, and water by adding TTIP to distilled water at a molar ratio of water to alkoxide in excess of the stoichiometric value of 4, preferably nearing 100. Sufficient acid to preferably attain a pH below about 4, with a pH of about 3 or less especially preferred and molar ratio of acid/TTIP of about 0.1 to about 0.6, is then added to the sol to prevent the titanium tetrahydroxide particulates from agglomerating and thereby precipitating from solution. Small quantities of isopropyl alcohol of at least about 2% by volume (based upon the total solution volume), with up to about 10% preferred, can then be added as a homogenizing agent and as a TTIP and water reaction rate reducing agent which slows down the agglomeration process. Then, while continuously stirring to disperse the particles and to protonate the titanium tetrahydroxide particles, the solution is heated, at below boiling, and typically about 60°C to about 90°C, for up to about 72 hours or more, with up to about 12 hours typically sufficient to form a well dispersed gel. The substrate, once cleaned, is then coated with the gel by dipping, spin-coating, painting, spraying, flow coating, or a similar coating technique.

Cleaning the substrate requires removal of substantially all of the contaminants thereon, i.e. greater than about 95% removal. Contaminant removal comprises washing the substrate with water and detergent, such as ALCONOX®, phosphate based detergent, produced by Alconox, Inc., New York, New York, or other common detergent capable of removing oils, greases, fats, and soils. The substrate is then immersed in a strong acid solution, such as CHROMERGE™, a sulfochromic solution produced by Monostat Corporation, New York, New York, or another solution capable of removing fixed deposits. Typically, the substrate is immersed in the acid solution, which can be heated to facilitate the cleaning process, for a period sufficient to dissolve the fixed deposits, typically less than about 2 hours. The substrate is then rinsed with bidistilled water followed by acetone, and dried, preferably a vacuum oven to prevent new contamination.

The photocatalytic semiconductor coating can be applied to a wide variety of substrates such as glass such as quartz, plastic, ceramics, and metals, among others. However, for use in a vehicle or room, it is preferable to coat a substrate which is transparent to visible light such as glass such as quartz or plastic, with substrates transparent to both visible and UV light especially preferred. Substrates transparent to both visible and UV light can serve a dual function; the substrate for the photocatalytic semiconductor and the windows, windshields, etc. for the vehicles. Such dual use both minimizes the "size" of the organic pollutant removal means and enables the use of natural, atmospheric, UV.

Once coated, the substrate is heated to dewater the sol, to chemically and physically bond the coating to the substrate, and to form an adherent, substantially anatase ceramic, i.e. preferably greater than about 90% anatase with a coating comprising as little as 60% anatase being feasible but much less efficient. The coated substrate is heated to a temperature sufficient to convert the coating to anatase, at a sufficiently slow rate to prevent cracks and/or flaking of the coating due to out-gassing of the water vapor, alcohol, and other volatile compounds. Typically the TiO₂ can be converted to anatase at a temperature of about 300°C to about 600°C, with about 300°C to about 500°C, and about 375°C to about 425°C especially preferred. Generally, heating the sol at a rate of less than about 10°C/min. is sufficient, with a rate of less than about 5°C/min. preferred, and a rate up to about 3°C/min. especially preferred.

The desired thickness of the coating, which can be adjusted during the coating process, is a function of the coating location. For example, when applied to a windshield, the coating must be substantially clear such that a vehicle operator's vision is not impaired by the coating. Typically, a thickness up to about 1 micron (µ) is used on a window or windshield, with about 0.25µ to about 3.0µ acceptable. Coatings on substrates whose visible light transparency is not relevant, organic pollutant removal systems located in heating/ventilation ducts for example, can be up to or exceeding about 10µ, with about 2.0µ to about 5.0µ preferred. In such cases, the coating thickness is a factor of the oxidation rate and possible weight constraints.

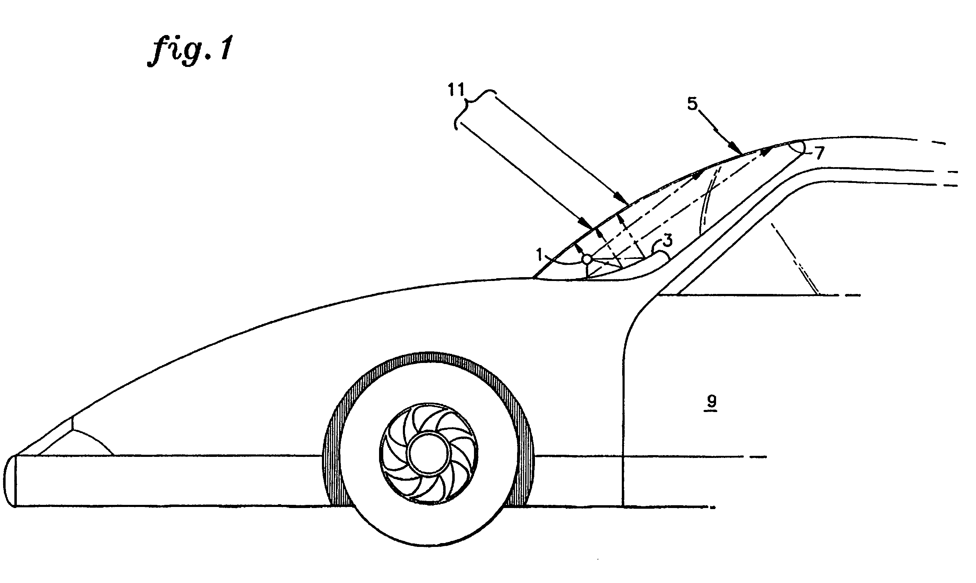

Use of the coated substrate in the oxidation of organic pollutants comprises activating the photocatalytic semiconductor by illuminating it with light having a wavelength in the same band gap as the photocatalytic semiconductor. For example, illumination of the photocatalytic semiconductor can be accomplished via atmospheric UV, or the use of a UV source such as a lamp, laser, or similar device having a wavelength within the band gap of the photocatalytic semiconductor. Since UV below about 200 nanometers promotes the formation of ozone, for TiO₂, the UV wavelength of about 200 nm to about 400 nm, with about 220 nm to about 360 nm is preferred, and about 300 to about 360 nm is especially preferred. (see Figure 1) The utilization efficiency of the UV source can be improved via the employment of a reflective device which reflects stray UV back at the coating. Possible reflective devices include polished aluminum surfaces and any mirrored surfaces, among others.

Upon contact between the illuminated photocatalytic semiconductor coating and the organic pollutants, hydroxyl radicals, formed by the dissociation of water adsorbed on the photocatalytic semiconductor from the organic pollutant stream or other source, oxidize the organic pollutants down to carbon dioxide, water, and minor amounts of byproducts.

Over time organic pollutants and products thereof can build up on the surface of the photocatalytic semiconductor thereby decreasing its efficiency. Regeneration thereof however, is readily accomplished by decreasing or ceasing contact with the organic pollutant while continuing to illuminate the photocatalytic semiconductor for a sufficient period to oxidize any residual organic pollutants thereon. Regeneration can also be accomplished by heating the photocatalytic semiconductor, i.e. to between about 100°C to about 500°C for a period of about 1.5 hours, and/or rinsing the photocatalytic semiconductor with a mild acid solution; i.e. a vinegar and water solution.

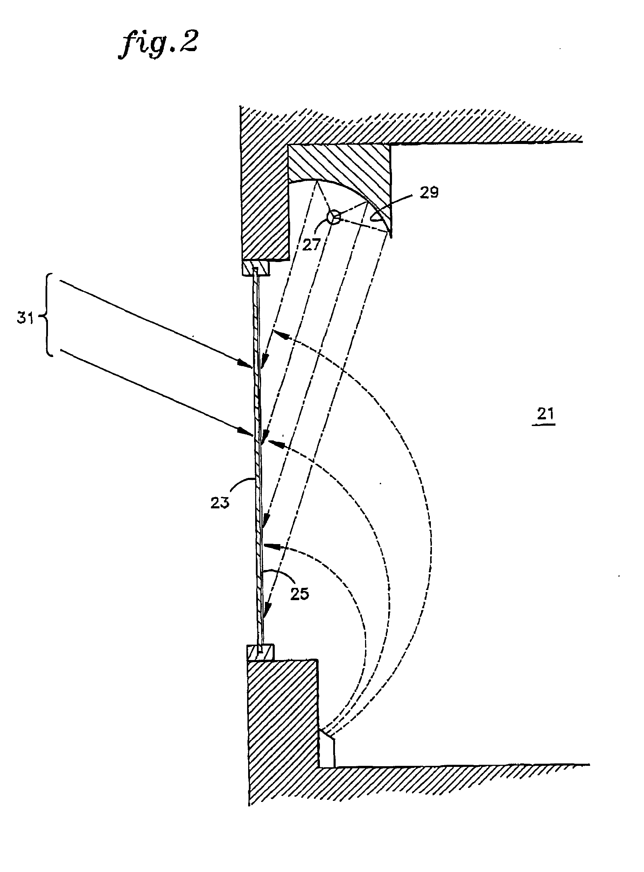

Figures 1 and 2, which are meant to be exemplary, not limiting, show two possible embodiments which do not form part of the present invention. Figure 1 illustrates the use of the present invention in a car (9) where UV light from natural sources (11) and from a UV lamp (1) both directly and indirectly, via the use of a reflective surface (3), illuminate a TiO₂ coating (7) located on the interior surface of the windshield (5). The illuminated TiO₂ coating (7) oxidizes organic pollutants which have condensed on the windshield (5), such as phthalates, fire retardants and oils from the upholstery and dashboard, and hydrogen sulfide, methyl-ethyl ketone, 1,3-butadiene, toluene, and acetone from external sources drawn into the car through the ventilation system and/or windows.

In Figure 2, organic pollutants in a room (21) which have condensed on the interior surface of a window (23) are oxidized by a TiO₂ coating (25) located thereon. UV from natural sources (31) and from a UV lamp (27) illuminate, and thereby activate, the TiO₂ coating (25) via the assistance of a reflective surface (29) such that the TiO₂ oxidizes the organic pollutants thereon.

According to the invention, organic pollutants are removed from enclosed environments such as within vehicles, aircraft, spacecraft, and submarines using the ventilation systems thereof. For example, substrates, such as blades in squirrel blowers, within the ventilation systems can be coated with the photocatalytic semiconductor. The coating can then be illuminated by a UV source placed similarly located within that system. In such an embodiment, the blades would move the air through the blower, the coating on the blades would adsorb water and organic pollutants in the air and oxidize the organic pollutants with hydroxyl radicals formed by the dissociation of water molecules on the illuminated photocatalytic semiconductor coating.

The following example demonstrates the present invention without limiting its broad scope.

### Example

The following example was used to coat glass with a 1µ coating of TiO₂.

In a three neck distilling flask 275 cc of water was mixed with 4 cc of nitric acid. While vigorously stirring, a mix of 50 cc TTIP and 8 cc isopropyl alcohol was slowly added using a dropping funnel. With the assistance of a reflux condenser which captures and returns any water vapor generated, the resulting solution was then heated to 80°C for about 12 hours while continuing to stir to form a gel. The cooled gel was then sonicated for 1 hour.

Meanwhile, the substrate was washed with water and ALCONOX®, and then immersed in CHROMERGE™, sulfochromic solution for 2 hours at 60°C. The cleaned substrate was then rinsed with bidistilled water followed by acetone, and dried in vacuum oven for 1 hour.

The cleaned substrate was then coated with the gel via spin-coating and heated at a rate of 2°-3°C/min. to a temperature of 400°C for 1 hour in order to dewater the gel to a thin, translucent, adherent, anatase ceramic.

The coating formed using the above technique was tested using tests similar to the standard military specification MIL-C-675C to determine the durability. The coating passed both the adhesion test and the moderate abrasion test.

The advantages of the present invention include: the ability to use UV to activate the photocatalytic semiconductor in the removal of organic pollutants from buildings and the interior of vehicles, the reduced energy use versus prior art filter systems such as carbon bed devices, and the size and simplicity of the system. The coating of the present invention is sufficiently adherent to withstand normal contact (i.e. human contact) and sufficiently optically clear such that coating a windshield, for example, does not result in diminution of the optical visibility through the windshield; the coating is clear.

## Claims

1. Ventilating system for removing organic pollutants from an enclosure defining an enclosed environment, said ventilating system for circulating air through the enclosed environment having a bladed blower, a photocatalytic semiconductor coating deposited upon the blades of the blower and a UV lamp disposed in the ventilating system in operative association with the blower whereby in the operation the UV lamp illuminates the photocatalytic semiconductor coating upon the blades of the blower.

2. Ventilating system as in claim 1 wherein the photocatalytic semiconductor coating is tin dioxide, titanium dioxide, zinc dioxide, cadmium sulfide, tungsten trioxide, lead oxide, iron titanium trioxide, vanadium pentoxide, or iron oxide.

3. Ventilating system as in claim 1 or 2 wherein the photocatalytic semiconductor coating has a thickness of about 0.25 to 10 micrometers.

4. Ventilating system as in claim 1 or 2 wherein the photocatalytic semiconductor coating has a thickness of about 0.25 to 3 micrometers.

5. Ventilating system as in claim 1 or 2 wherein the photocatalytic semiconductor coating has a thickness of up to about 1 micrometer.

## Patentansprüche

1. Ventilationssystem zum Entfernen organischer Schadstoffe aus einer Umschließung, welche eine geschlossene Umgebung definiert, wobei das Ventilationssystem zum Zirkulieren von Luft durch die geschlossene Umgebung ein Schaufelgebläse, eine fotokatalytische Halbleiterbeschichtung, die auf den Schaufeln des Gebläses abgeschieden ist, und eine UV-Lampe aufweist, die im Ventilationssystem in betriebsmäßiger Zuordnung mit dem Gebläse angeordnet ist, wobei während des Betriebs die UV-Lampe die fotokatalytische Halbleiterbeschichtung auf den Schaufeln des Gebläses beleuchtet.

2. Ventilationssystem nach Anspruch 1, wobei die fotokatalytische Halbleiterbeschichtung Zinndioxid, Titandioxid, Zinkdioxid, Cadmiumsulfid, Wolframtrioxid, Bleioxid, Eisentitantrioxid, Vanadiumpentoxid, oder Eisenoxid ist.

3. Ventilationssystem nach Anspruch 1 oder 2, wobei die fotokatalytische Halbleiterbeschichtung eine Dicke von ca. 0,25 bis 10 µm hat.

4. Ventilationssystem nach Anspruch 1 oder 2, wobei die fotokatalytische Halbleiterbeschichtung eine Dicke von ca. 0,25 bis 3 µm hat.

5. Ventilationssystem nach Anspruch 1 oder 2, wobei die fotokatalytische Halbleiterbeschichtung eine Dicke von bis zu ca. 1 µm hat.

## Revendications

1. Système de ventilation pour retirer les polluants organiques d'une enceinte définissant un environnement clos, ledit système de ventilation pour faire circuler l'air dans l'environnement clos ayant un ventilateur à pales, un revêtement semi-conducteur photocatalytique déposé sur les pales du ventilateur et une lampe UV disposée dans le système de ventilation en association fonctionnelle avec le ventilateur moyennant quoi en fonctionnement la lampe UV éclaire le revêtement semi-conducteur photocatalytique sur les pales du ventilateur.

2. Système de ventilation selon la revendication 1 dans lequel le revêtement semi-conducteur photocatalytique est de l'oxyde tannique, du dioxyde de titane, du dioxyde de zinc, du sulfure de cadmium, de l'anhydride tungstique, de l'oxyde de plomb, du trioxyde de titane ferrique, de l'anhydride vanadique ou de l'oxyde de fer.

3. Système de ventilation selon la revendication 1 ou 2 dans lequel le revêtement semi-conducteur photocatalytique a une épaisseur comprise entre environ 0,25 et 10 micromètres.

4. Système de ventilation selon la revendication 1 ou 2 dans lequel le revêtement semi-conducteur photocatalytique a une épaisseur comprise entre environ 0,25 et 3 micromètres.

5. Système de ventilation selon la revendication 1 ou 2 dans lequel le revêtement semi-conducteur photocatalytique a une épaisseur allant jusqu'à environ 1 micromètre.
